# EUROPÄISCHE PATENTSCHRIFT

(11) **EP 3 837 934 B1**
(45) Veröffentlichungstag und Bekanntmachung des Hinweises auf die Patenterteilung: **28.06.2023**
(21) Anmeldenummer: 20201437.9
(22) Anmeldetag: 13.10.2020
(51) Int. Cl.: A01B 15/04, A01B 15/06, A01B 35/26

(54) **BODENBEARBEITUNGSGERÄT ZUR LANDWIRTSCHAFTLICHEN AUFBEREITUNG VON ERDREICH**
EARTH WORKING IMPLEMENT FOR AGRICULTURAL EARTH TREATMENT
DISPOSITIF DE TRAVAIL DE SOL DESTINÉ AU TRAVAIL AGRICOLE DE LA TERRE

(30) Priorität: 19.12.2019 AT 511412019
(43) Veröffentlichungstag der Anmeldung: 23.06.2021
(73) Patentinhaber: BOEHLERIT GmbH & Co.KG., 8605 Kapfenberg (AT)
(72) Erfinder: Bärnthaler, Walter, 8641 St. Marein im Mürztal (AT); Burböck, Hannes, 8652 Kindberg/Aumühl (AT)
(74) Vertreter: Wirnsberger & Lerchbaum Patentanwälte OG

(56) Entgegenhaltungen:
- EP-A1- 1 397 949
- EP-A1- 3 014 965
- EP-A1- 3 516 938
- AU-A- 9 105 682
- DE-U1- 8 033 066
- US-B1- 6 315 058

## Beschreibung

Die Erfindung betrifft ein Bodenbearbeitungsgerät zur landwirtschaftlichen Aufbereitung von Erdreich, insbesondere zum flächigen Schneiden von Erdreich, umfassend einen Grundkörper sowie auf diesem angeordnete Schneidelemente, wobei der Grundkörper eine Trägerfläche und eine Gleitfläche aufweist, wobei auf der Trägerfläche Schneidelemente angeordnet sind und wobei über die Gleitfläche Erdreich abgleiten kann.

Die Aufbereitung von Erdreich spielt in der Landwirtschaft zur Erzielung einer hohen Ausbringung von Erntegut bzw. Produktivität eine durchaus beachtliche Rolle. Eine gute Aufbereitung von Erdreich vor dem Ausbringen einer neuen Saat kann für die Erzielung eines gewünschten Ernteerfolges mitentscheidend sein. Dementsprechend wurde in jüngerer Vergangenheit daher auch Wert darauf gelegt, entsprechende Bodenbearbeitungsgeräte für eine gute Aufbereitung des Erdreichs vor einer Aussaat weiterzuentwickeln.

Für die landwirtschaftliche Aufbereitung von Erdreich ist es in der Regel erforderlich, dieses mit einem flächigen Schnitt zu durchtrennen, wobei eine oberste Schicht des Erdreichs, in der Regel in einer Tiefe von etwa 2 cm bis 15 cm, möglichst glatt durchtrennt werden soll. Dadurch werden im Erdreich noch verbliebene Wurzeln, insbesondere solche von Unkraut, durchtrennt und gleichzeitig das Erdreich etwas gelockert. Für ein entsprechendes Schneiden eignen sich insbesondere Gänsefußscharen, die an einem Traktor befestigt und von diesem nachgezogen werden.

Im Zusammenhang mit Gänsefußscharen, aber auch anderen landwirtschaftlichen Bodenbearbeitungsgeräten ist es bekannt geworden, die Standzeit von entsprechenden Geräten dadurch zu erhöhen, dass in den schneidaktiven Bereichen Hartmetalleinsätze als Schneidelemente angeordnet werden. Diese Schneidelemente sind in Bezug auf den wirtschaftlichen Nutzen auf den ersten Blick zunächst nachteilig, weil Hartmetall deutlich teurer ist als Stahl, welcher üblicherweise für derartige Geräte verwendet wird, und zudem die Herstellung und das spätere Befestigen der Schneidelemente an einem Grundkörper aus Stahl mehrere Arbeitsschritte erfordert. Aufgrund einer dann allerdings deutlich erhöhten Standzeit rechnen sich diese Kosten dennoch bzw. führen in einer Gesamtbetrachtung zu einem besseren Kosten-Nutzen-Verhältnis.

Auch für Gänsefußscharen oder ähnliche Bodenbearbeitungsgeräte zur Aufbereitung von Erdreich ist es bekannt, Grundkörper, die an sich bereits einsatztauglich wären, so zu adaptieren, dass diese mit Schneidelementen aus Hartmetall ausgestattet sind. Im Rahmen dieser Erfindung wurde allerdings festgestellt, dass auch entsprechende Bodenbearbeitungsgeräte nach wie vor erhebliches Verbesserungspotenzial aufweisen, da die Arbeitsergebnisse trotz eines glatten Schnittes nach wie vor unbefriedigend sind. Es hat sich unter anderem gezeigt, dass eine Tendenz dazu gegeben ist, dass beim flächigen Durchtrennen durch die Anlage eines Bodenbearbeitungsgerätes am unteren Teil des durchtrennten Erdreichs eine Schmierschicht gebildet wird. Eine solche Schmierschicht führt dazu, dass der untere Teil des durchtrennten Erdreichs quasi abgedichtet wird, was in zweierlei Hinsicht nachteilig ist: Zum einen ist von unten her ein Versorgungsnachschub für Pflanzen mit Grundwasser unterbunden. Zum anderen ist ein Versickern von Regenwasser behindert, was ebenso nachteilig ist. Das Dokument EP 3 516 938 A1 zeigt ein bekanntes Bodenbearbeitungsgerät zur landwirtschaftlichen Aufbereitung von Erdreich mit einer Gleitfläche zum Abgleiten von Erdreich und einer Trägerfläche mit Schneidelementen zum Durchtrennen von Erdreich.

Aufgabe der Erfindung ist es, ein Bodenbearbeitungsgerät der eingangs genannten Art derart weiterzubilden, dass die vorstehenden Nachteile der Bildung einer Schmierschicht beim Durchtrennen von Erdreich vermieden oder zumindest verringert sind.

Diese Aufgabe wird gelöst, wenn bei einem Bodenbearbeitungsgerät der eingangs genannten Art die Gleitfläche einer Trägerfläche mit einem Winkel anschließt, sodass sich von der Trägerfläche weg ein Abstand der Gleitfläche zum Erdreich vergrößert.

Der Erfindung liegen folgende Überlegungen zugrunde:
Eine Gänsefußschare oder ein ähnliches Bodenbearbeitungsgerät weist einen stielförmigen Ansatz auf, mit dem das Bodenbearbeitungsgerät an einem Traktor oder einer anderen Zugmaschine befestigbar ist. Hierfür ist in der Regel ein Befestigungsloch im Bearbeitungsgerät vorgesehen. Wenngleich eine starre Befestigung erfolgt, lässt es sich nicht gänzlich vermeiden, dass der Grundkörper um einige Grad auslenkt, insbesondere bei der gegebenen kräftemäßigen Belastung beim Schneiden bzw. Durchtrennen von Erdreich. Dadurch kann es dazu kommen, dass trotz getroffener Voreinstellungen der Grundkörper so verkippt, dass dieser am unteren Teil des durchtrennten Erdreichs anliegt und dadurch nach dem gewünschten Durchtrennen des Erdreiches einen Schmierfilm bildet. Durch das erfindungsgemäße Konzept ist dies jedoch vermieden. Auch wenn ein Winkelfehler gegeben sein sollte, ist immer ein ausreichender Freiraum zum Erdreich hin gegeben, nämlich dem unteren Teil des durchtrennten Erdreichs, sodass keine Schmierschicht gebildet wird. Dies wird dadurch erzielt, dass die Gleitfläche an die Trägerfläche mit einem geeigneten Winkel anschließt, sodass sich ein Abstand der Gleitfläche zum Erdreich vergrößert. Anders ausgedrückt kann auch gesagt werden, dass die Gleitfläche nicht parallel zum Erdreich bzw. dem unteren Teil des durchtrennten Erdreichs verläuft, sondern geneigt nach oben hin angestellt ist, zumindest im Anschlussbereich an die Trägerfläche. Dadurch wird der erwähnte Freiraum gebildet, der zusätzlich auch dazu führt, dass eine geringere Reibung bei einem flächigen Durchtrennen von Erdreich gegeben ist, weil eine Anlage des Grundkörpers bzw. dessen Gleitfläche am Erdreich verringert wird.

Ein weiterer Vorteil ist, dass der Grundkörper durch die Beabstandung zum unteren Teil des durchtrennten Erdreiches weniger stark verschleißt. In jenen Bereichen, in welchen ein hoher Verschleiß gegeben ist, sind ohnedies Hartmetallbestückungen bzw. Schneidelemente aus Hartmetall vorgesehen. Somit sind die dem größten Verschleiß unterliegenden Bereiche mit besonders verschleißfestem Material ausgestattet, die übrigen Bereiche aber insofern optimiert, als ein Verschleiß im Vergleich mit dem Stand der Technik reduziert ist. Dadurch kann der Grundkörper bzw. die Gleitfläche auch mit weniger Material gefertigt werden, was eine Materialersparnis bedeutet. Dies führt zur weiteren, theoretischen Überlegung, dass das Bodenbearbeitungsgerät dann weniger stabil sein könnte, was allerdings nicht der Fall ist, da das Ankippen der Gleitfläche an die Trägerfläche zu einer zusätzlichen Versteifung führt, welches sich günstig auf die Stabilität des Bodenbearbeitungsgerätes im Betrieb bzw. Einsatz auswirkt.

Es kann vorgesehen sein, dass sich der Abstand zumindest im Bereich eines Anschlusses der Gleitfläche an die Trägerfläche vergrößert. Gerade in diesem Bereich oder diesen Bereichen kann es wichtig sein, dass eine entsprechende Beabstandung der Gleitfläche von einem unteren Teil des durchtrennten Erdreichs gegeben ist. An der Oberseite der Gleitfläche kann der obere Teil des durchtrennten Erdreichs abgleiten, wie dies zweckmäßig ist. Trotz dieses Druckes auf die Gleitfläche legt sich diese dann aber im Bereich der Trägerfläche bzw. den Anschluss hieran nicht an den unteren Teil des durchtrennten Erdreichs an.

Besonders bevorzugt ist es aus den erläuterten Gründen, dass sich der Abstand von einem Anschluss der Gleitfläche an die Trägerfläche zu einem gegenüberliegenden Ende der Gleitfläche vergrößert. In der Praxis mündet die Gleitfläche in einen stielförmigen Ansatz, über welchen eine Befestigung an einer Zugmaschine möglich ist, oder geht mittelbar über weitere Bereiche des Grundkörpers in einen solchen stielförmigen Ansatz über. Da der Druck auf die Gleitfläche durch das Abgleiten des Erdreichs zum stilförmigen Ansatz hin zunehmen kann, kann mit Vorteil eine Vergrößerung des Abstandes entlang dieser Richtung vorgesehen sein. Diese Vergrößerung kann beispielsweise kontinuierlich ausgebildet sein. Kontinuierlich bedeutet in diesem Zusammenhang, dass sich der Abstand der Gleitfläche in der angegebenen Richtung von der Trägerfläche zum stielförmigen Ansatz hin immer vergrößert, wobei jedoch die Vergrößerung in Bezug auf eine Länge in der Richtung von der Trägerfläche zum stielförmigen Ansatz variieren kann, die Änderung des Abstandes über eine Längeneinheit also nicht konstant sein muss.

Alternativ ist es allerdings auch möglich, dass sich ein Abstand der Gleitfläche zum unteren Teil des durchtrennten Erdreiches hin zunächst vergrößert, dann aber mit konstant beabstandet ist. Auch weitere Ausbildungen sind möglich, wobei auch Bereiche vorgesehen sein können, in welchen sich der Abstand vergrößert und danach wieder verkleinert, oder in einer weiteren Alternative, abschnittsweise konstant ist und dann wieder vergrößert.

Bevorzugt ist es weiter, dass die Gleitfläche zumindest in einzelnen Bereichen mit einem Winkel von zumindest 135°, vorzugsweise zumindest 140°, insbesondere zumindest 142,5°, an die Trägerfläche anschließt. Durch eine entsprechende Anstellung der Gleitfläche kann die gewünschte Freistellung zum Erdreich hin erreicht werden. Je höher der Winkel ist, umso besser die Freistellung. Es können auch Winkel von 145°, 147,5°, 150°, 152,5°, 155°, 157,5°, 160°, 162,5° oder 165° vorgesehen sein. Auch größere Winkel sind möglich, beispielsweise in weiteren Schritten von jeweils 2,5° beginnend von 165°. Je höher allerdings dieser Anstellwinkel ist, umso höher ist auch die Krafteinwirkung beim Durchtrennen von Erdreich. Insofern ist ein Winkelbereich beginnend bei ungefähr 135° bis etwa 160° als optimal anzusehen.

Die vorstehenden Winkel beziehen sich auf einen Winkel zwischen der Trägerfläche und der Gleitfläche, wobei die Trägerfläche und damit die Schneidelemente etwa mit 15° bis 45°, beispielsweise 25° bis 35°, an das Erdreich oder den Boden angestellt sind. Die Freistellung bzw. Anhebung der Gleitfläche relativ zum Boden kann auch durch einen Winkel ausgedrückt werden, der zwischen Gleitfläche und Boden eingeschlossen wird, wenn die Gleitfläche am Anschluss zur Trägerfläche gedanklich verlängert wird. Der sich so ergebende spitze Winkel beträgt etwa 5° bis 25°, vorzugsweise 7,5° bis 15°, insbesondere 10° bis 12,5°.

Es kann vorgesehen sein, dass die Trägerfläche zumindest abschnittsweise gebogen ausgebildet ist. An der Trägerfläche sind ein oder mehrere Schneidelemente befestigt. Ein Übergang zur Gleitfläche hin kann über einen oder mehrere Radien erfolgen. Insbesondere kann auch eine Abfolge von gebogenen Abschnitten vorgesehen sein. Die gebogenen Abschnitte können dabei, mit unterschiedlichen Radien, aneinander anschließen. Möglich ist es aber auch, dass gebogene Abschnitte durch eben verlaufende Bereiche verbunden sind. In diesem Fall können die gebogenen Abschnitte auch mit gleichem Radius ausgebildet sein, was allerdings nicht zwingend ist.

Wie erwähnt sind an der Trägerfläche stirnseitig ein oder mehrere Schneidelemente angeordnet. Die Schneidelemente sorgen für die gewünschte Schnittwirkung beim Durchtrennen von Erdreich. Grundsätzlich können die Schneidelemente von der Form her beliebig ausgebildet sein. Besonders zweckmäßig haben sich Schneidelemente erwiesen, die wie in der österreichischen Patentanmeldung A 50553/2019 ausgebildet sind und sich insbesondere wie folgt darstellen:
Das Schneidelement aus Hartmetall weist eine Oberseite und eine Unterseite sowie eine Stirnseite, eine der Stirnseite gegenüberliegende Rückseite und zumindest eine Seitenfläche, wobei die Oberseite und die Unterseite über Stirnseite, Rückseite und die zumindest eine Seitenfläche verbunden sind und die Stirnseite einen Schneidbereich mit mehreren Zähnen aufweist, wobei zumindest ein Zahn mit einer ersten Flanke und einer zweiten Flanke gebildet ist, wobei eine Profillinie der ersten Flanke und eine Profillinie der zweiten Flanke unterschiedlich lang sind.

Beim Schneidelement kann vorgesehen sein, dass die erste Flanke des zumindest einen Zahnes in einer Arbeitsrichtung nach der zweiten Flanke des zumindest einen Zahnes angeordnet ist.

Vorgesehen sein kann auch, dass die zweite Flanke mit einer gedachten Ebene, welche parallel zur Stirnseite liegt, in einer Draufsicht einen Winkel von 0° bis 60°, vorzugsweise 2° bis 45°, insbesondere 5° bis 15°, einschließt.

Vorgesehen sein kann des Weiteren, dass die zweite Flanke des zumindest einen Zahnes unter einem Winkel von 60° bis 120°, vorzugsweise 70° bis 110°, insbesondere 90°, zu der ersten Flanke eines nachfolgenden Zahnes angeordnet ist.

Vorgesehen sein kann überdies, dass die Profillinie der zweiten Flanke des Zahnes mehr als 1,1-mal, zumindest doppelt, insbesondere fünfmal so lang wie die Profillinie der ersten Flanke des zumindest einen Zahnes ist.

Vorgesehen sein kann ferner, dass der Schneidbereich zwei bis zehn, vorzugsweise drei bis fünf, insbesondere vier Zähne aufweist.

Vorgesehen sein kann, dass eine Länge des Schneidelementes zumindest gleich lang, vorzugsweise doppelt so lang, insbesondere dreimal so lang, wie eine Breite des Schneidelementes ist.

Vorgesehen sein kann, dass die Länge des Schneidelementes zumindest gleich lang, vorzugsweise fünfmal so lang, insbesondere zwanzigmal so lang wie eine Höhe des Schneidelementes ist.

Der Grundkörper ist bevorzugt aus einem Stahl gebildet. Der Grundkörper kann zwar beliebig erstellt sein, vorzugsweise ist dieser allerdings durch Schmieden erstellt. Wenn für einzelne Schneidelemente Plattensitze vorgesehen sind, können die Plattensitze im gegebenenfalls geschmiedeten Grundkörper durch spanabhebende Bearbeitung, insbesondere durch Fräsen, eingearbeitet sein. Hierbei kann vorgesehen sein, dass einzelne Plattensitze so ausgebildet sind, dass die Schneidelemente einander nicht berühren, wobei allerdings eine Anstellung der Plattensitze so gewählt ist, dass die Schneidelemente dennoch durch eine in Schneidrichtung versetzte Anordnung eine gemeinsame, durchgehende Schneidkante bilden. Hierfür kann vorgesehen sein, dass der Grundkörper in Schneidrichtung mit einer konischen Form, insbesondere einer v-Form ausgebildet ist, oder zumindest ein in Schneidrichtung schräger Verlauf des Bodenbearbeitungsgerätes gegeben ist.

Die Schneidelemente können aus einem Hartmetall gebildet sein, wenngleich grundsätzlich auch ein hoch verschleißfester Stahl, welcher deutlich verschleißfester als der Grundkörper ist, infrage kommt. Bevorzugt allerdings wird Hartmetall verwendet, da dieses besonders verschleißfest ist. Für das Hartmetall kommen verschiedene Sorten zur Anwendung. Es hat sich jedoch gezeigt, dass Hartmetallsorten mit etwa 80 Gewichtsprozent (im Folgenden: Gew.-%) bis 95 Gew.-% sowie einem Bindemetall, vorzugsweise Eisen, Nickel und/oder Cobalt, gemeinsam im Ausmaß von 5 Gew.-% bis 15 Gew.-%, bevorzugt 7 Gew.-% bis 13 Gew.-%, insbesondere 8 Gew.-% bis 12 Gew.-% zweckmäßig sind. Besonders bevorzugt ist dabei, wenn das Bindemetall im Wesentlichen cobaltfrei vorliegt, also nur mit Eisen und gegebenenfalls Nickel gebildet ist. Das Wolframcarbid kann mit einer durchschnittlichen Korngröße im Bereich von etwa 1,5 µm bis 5 µm, insbesondere 2,0 µm bis 3,0 µm vorliegen. Entsprechende Hartmetallsorten haben sich als geeignet für Schneidleistungen im landwirtschaftlichen Bereich gezeigt. Es kann auch vorgesehen sein, dass der Einsatz beschichtet ist. Hierfür kommen Beschichtungen mittels CVD- oder PVD-Verfahren in Betracht. Bei den Beschichtungen kann es sich beispielsweise um Beschichtungen des Typs Al₁₋ₓTiₓN handeln. Entsprechende Beschichtungen können eine Schichtdicke von beispielsweise bis zu 15 µm aufweisen. Möglich sind auch Beschichtungen mit alternierenden Beschichtungslagen unterschiedlicher Zusammensetzungen.

Ein erfindungsgemäßes Bodenbearbeitungsgerät ist mit Vorteil als Schar, insbesondere als Gänsefußschar ausgebildet. Das erfindungsgemäße Konzept kann allerdings auch bei allen anderen Bodenbearbeitungsgeräten mit Schneidelementen eingesetzt werden, wenn es darauf ankommt, dass eine möglichst effiziente Durchtrennung von Erdreich erfolgen soll, wobei eine Ausbildung einer Schmierschicht möglichst hintanzuhalten ist.

Weitere Merkmale, Vorteile und Wirkungen der Erfindung ergeben sich aus dem nachfolgend dargestellten Ausführungsbeispiel. In den Zeichnungen, auf welche dabei Bezug genommen wird, zeigen:
Fig. 1 eine Draufsicht auf ein Bodenbearbeitungsgerät;
Fig. 2 eine stirnseitige Ansicht des Bodenbearbeitungsgerätes gemäß Fig. 1;
Fig. 3 eine untere Ansicht des Bodenbearbeitungsgerätes gemäß Fig. 1;
Fig. 4 einen Schnitt entlang der Linie IV-IV in Fig. 1;
Fig. 5 einen Schnitt entlang der Linie V-V in Fig. 1;
Fig. 6 einen Schnitt entlang der Linie VI-VI in Fig. 1;
Fig. 7 eine perspektivische Darstellung des Bodenbearbeitungsgerätes gemäß Fig. 1;
Fig. 8 eine weitere perspektivische Darstellung des Bodenbearbeitungsgerätes gemäß Fig. 1;
Fig. 9 einen Querschnitt durch ein Bodenbearbeitungsgerät gemäß Fig. 1 entlang der Linie IV-IV zum Vergleich mit dem Stand der Technik.

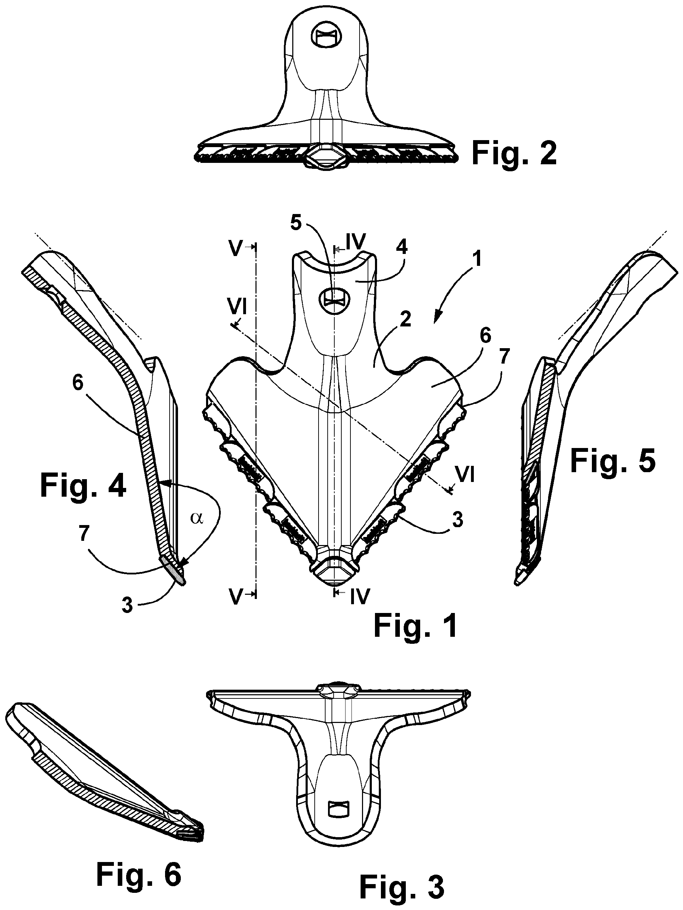

In Fig. 1 ist ein erfindungsgemäßes Bodenbearbeitungsgerät 1 dargestellt. Fig. 2 zeigt eine stirnseitige Ansicht und Fig. 3 eine untere Ansicht desselben Bodenbearbeitungsgerätes 1. Fig. 4 bis Fig. 6 zeigen Schnitte des Bodenbearbeitungsgerätes 1 entlang den Linien IV-IV (Fig. 4) sowie V-V (Fig. 5) und VI-VI (Fig. 6).

Wie insbesondere aus Fig. 1 und Fig. 2 ersichtlich ist, weist das Bodenbearbeitungsgerät 1, das als Gänsefußschar ausgebildet ist, einen in Draufsicht etwa v-förmigen Grundkörper 2 auf. Wenngleich der Grundkörper im Ausführungsbeispiel v-förmig ausgebildet ist, kann der Grundkörper grundsätzlich auch beliebige andere Gestaltungen annehmen, ist bevorzugt aber so ausgebildet, dass sich in Draufsicht eine Spitze ergibt, welche in Schneidrichtung zeigt. Im gegenständlichen Ausführungsbeispiel ist dies die v-Form, die in Schnittrichtung zeigt.

Der Grundkörper 2 des Bodenbearbeitungsgerätes 1 umfasst mehrere Bereiche. Zentral ist der Grundkörper 2 mit einer Gleitfläche 6 versehen, die rückseitig in einen stilförmigen Ansatz 4 übergeht. Dieser stilförmige Ansatz 4 dient zur Befestigung des Bodenbearbeitungsgerätes 1 an einer entsprechenden Aufnahme einer Zugmaschine wie eines Traktors. Hierfür ist der stilförmige Ansatz 4 mit einem Befestigungsloch 5 ausgebildet. Es können aber, wie auch bei anderen Ausführungsvarianten eines erfindungsgemäßen Bodenbearbeitungsgerätes 1, auch mehrere Befestigungslöcher vorgesehen sein. Möglich ist es auch, dass anstelle eines Befestigungsloches 5 zur Aufnahme eines Befestigungsmittels ein anderer Befestigungsmechanismus vorgesehen ist, beispielsweise ein Fixieren durch lösbares Klemmen.

Im stirnseitigen Bereich schließt die Gleitfläche 6 an eine Trägerfläche 7 an, die Schneidelemente 3 trägt. Es ist eine Vielzahl von Schneidelementen 3 vorgesehen. Die Schneidelemente 3 sind aus einem verschleißfesteren Material als der Grundkörper 2 gebildet. Hierfür können die Schneidelemente 3 insbesondere aus einem Hartmetall gebildet sein. Die Schneidelemente 3 können zur Erhöhung der Verschleißfestigkeit auch mit einer Beschichtung versehen sein.

Wie insbesondere aus Fig. 4 ersichtlich ist, geht die Gleitfläche 6 so in die Trägerfläche 7 über, dass sich im Querschnitt ein sich zum stilförmigen Ansatz 4 hin ergebener ansteigender Abstand zu einem Boden bzw. einem unteren Teil von durchtrenntem Erdreich gegeben ist. Dies wird dadurch erreicht, dass die Gleitfläche 6, wie insbesondere im Querschnitt gemäß Fig. 4 ersichtlich ist, hinsichtlich des Verlaufes gedanklich und dann auch praktisch nach oben geklappt wird. Durch dieses Anheben der Gleitfläche 6 bzw. eine stärkere Verkippung, beispielsweise mit einem Winkel α von etwa 135° bis 160°, wird eine entsprechende Freistellung nach unten hin erreicht. Wird nunmehr, wofür das Bodenbearbeitungsgerät 1 als Gänsefußschare ausgelegt ist, eine obere Schicht von Erdreich abgetrennt, gleitet das Bodenbearbeitungsgerät 1 über die untere Schicht, ohne dass die Gleitfläche 6 diese untere, verbleibende Erdschicht berühren würde. Dadurch ist vermieden, dass die Gleitfläche 6 durch Anlegen auf der nicht abgetrennten Erdschicht dort entlang schmiert und dadurch eine unerwünschte Schmierschicht bildet. Eine Anstellung der Schneidelemente 3 selbst, erfolgt etwa in einem Winkel von 25° bis 40°, bevorzugt etwa 27,5° bis 35°, sodass ein Einschneiden bzw. ein Durchtrennen von Erdreich in der üblichen Weise erfolgen kann. Abgetrenntes Erdreich gleitet auch wie im Stand der Technik entlang der Gleitfläche 6, die allerdings im Unterschied zum Stand der Technik eben nicht mehr am unteren Teil des Erdreichs entlang gleitet.

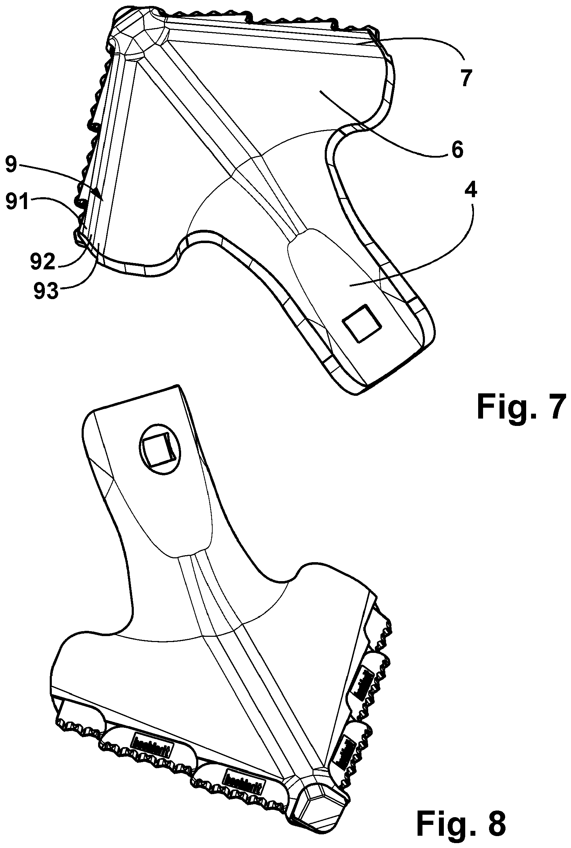

In Fig. 7 und Fig. 8 sind perspektivische Darstellungen des Bodenbearbeitungsgerätes 1 ersichtlich. Insbesondere aus Fig. 7 kann gesehen werden, dass die Trägerfläche 7 mehrere Abschnitte 9 aufweist. Im Ausführungsbeispiel ist eine Variante ersichtlich, in welcher die Abschnitte 91, 93 gebogen ausgebildet sind, und zwar mit verschiedenen Radien. Zwischen den beiden gebogenen Abschnitten 91, 93 ist ein ebener Abschnitt 92 vorgesehen. Auch andere Ausbildungen sind möglich. Beispielsweise können alle Abschnitte 9 gebogen ausgebildet sein. Eine geeignete Ausbildung hängt von den erwarteten Kräften und deren Überleitung im Wechselspiel zwischen Trägerfläche 7 und Gleitfläche 6 ab.

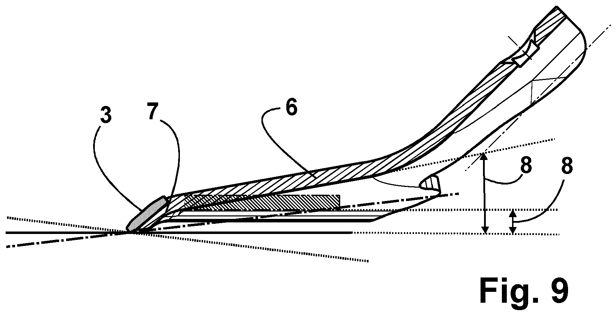

Aus Fig. 9 sind insbesondere die Unterschiede zum Stand der Technik ersichtlich. Fig. 9 zeigt ähnlich wie Fig. 4 wiederum einen Schnitt entlang der Linie IV-IV. Eingezeichnet ist ein weiterer schraffierter Bereich, der einen Verlauf der Gleitfläche 6 gemäß dem Stand der Technik andeutet. Wie ersichtlich ist, verläuft in diesem Fall die Gleitfläche 6 im Wesentlichen parallel zum Boden mit einem Abstand 8. Die Schneidelemente 3 sind auch gemäß dem Stand der Technik im gleichen Winkel befestigt, sodass sich grundsätzlich ähnliche Schnittbedingungen ergeben. Allerdings trägt der Stand der Technik nicht einer möglichen Verkippung des Grundkörpers 2 Rechnung, welche sich automatisch durch die Befestigung an einem Zugmittel ergibt. Selbst wenn diese anfänglich eine perfekte Positionierung bieten mag, kann sich im Laufe der Einsatzzeit durch Lockerung von Befestigungsmittel ein gewisses Spiel ergeben, sodass der Grundkörper 2 letztlich geringfügig auslenkt, was dann allerdings bereits ausreichend sein kann, sodass die Gleitfläche 6 gemäß dem Stand der Technik beim Durchtrennen von Erdreich an einem unteren Teil des Erdreiches anliegt und so den unerwünschten Schmiereffekt hervorruft. Ist allerdings eine Lösung gemäß Fig. 9 getroffen, ergibt sich wie ersichtlich eine deutlich größere Freistellung, wodurch auch das Problem des Schmiereffektes nachhaltig beseitigt werden kann.

In Fig. 1 bis 9 ist das Bodenbearbeitungsgerät 1 in Form einer Gänsefußschare dargestellt. Es versteht sich, dass die entsprechenden Merkmale sich ohne Weiteres auf analoge Bodenbearbeitungsgeräte 1 übertragen lässt, ohne dass dies den Gedanken der Erfindung berührt. Es versteht sich auch, dass die vorstehend erwähnten, mit dem Ausführungsbeispiel zusammenhängenden speziellen Merkmale auch ganz allgemein und losgelöst von weiteren Merkmalen des Ausführungsbeispiels angewendet werden können.

## Patentansprüche

1. Bodenbearbeitungsgerät (1) zur landwirtschaftlichen Aufbereitung von Erdreich, insbesondere zum flächigen Schneiden von Erdreich, umfassend einen Grundkörper (2) sowie auf diesem angeordnete Schneidelemente (3), wobei der Grundkörper (2) eine Trägerfläche (7) und eine Gleitfläche (6) aufweist, wobei auf der Trägerfläche (7) Schneidelemente (3) angeordnet sind und wobei über die Gleitfläche (6) Erdreich abgleiten kann, wobei die Gleitfläche (6) an die Trägerfläche (7) mit einem Winkel (α) angekippt anschließt, sodass sich von der Trägerfläche (7) weg ein Abstand (8) der Gleitfläche (6) zu einem unteren Teil des durchtrennten Erdreichs vergrößert.

2. Bodenbearbeitungsgerät (1) nach Anspruch 1, **dadurch gekennzeichnet, dass** sich der Abstand (8) zumindest im Bereich eines Anschlusses der Gleitfläche (6) an die Trägerfläche (7) vergrößert.

3. Bodenbearbeitungsgerät (1) nach Anspruch 1 oder 2, **dadurch gekennzeichnet, dass** sich der Abstand (8) von einem Anschluss der Gleitfläche (6) an die Trägerfläche (7) zu einem gegenüberliegenden Ende der Gleitfläche (6) vergrößert.

4. Bodenbearbeitungsgerät (1) nach Anspruch 3, **dadurch gekennzeichnet, dass** sich der Abstand (8) kontinuierlich vergrößert.

5. Bodenbearbeitungsgerät (1) nach einem der Ansprüche 1 bis 4, **dadurch gekennzeichnet, dass** die Gleitfläche (6) zumindest in einzelnen Bereichen mit einem Winkel (α) von zumindest 135°, vorzugsweise zumindest 140°, insbesondere zumindest 142,5°, an die Trägerfläche (7) anschließt.

6. Bodenbearbeitungsgerät (1) nach einem der Ansprüche 1 bis 5, **dadurch gekennzeichnet, dass** die Trägerfläche (7) zumindest abschnittsweise gebogen ausgebildet ist.

7. Bodenbearbeitungsgerät (1) nach Anspruch 6, **dadurch gekennzeichnet, dass** die Trägerfläche (7) mit mehreren gebogenen Abschnitten ausgebildet ist.

8. Bodenbearbeitungsgerät (1) nach einem der Ansprüche 1 bis 7, **dadurch gekennzeichnet, dass** an der Trägerfläche (7) stirnseitig ein oder mehrere Schneidelemente (3) angeordnet sind.

9. Bodenbearbeitungsgerät (1) nach einem der Ansprüche 1 bis 8, **dadurch gekennzeichnet, dass** Grundkörper (2) aus einem Stahl gebildet ist.

10. Bodenbearbeitungsgerät (1) nach einem der Ansprüche 1 bis 9, **dadurch gekennzeichnet, dass** das Bodenbearbeitungsgerät (1) eine Gänsefußschar ist.

## Claims

1. A soil tillage implement (1) for the agricultural processing of soil, in particular, for the surface cutting of soil, comprising a base body (2) as well as cutting elements (3) arranged on it, wherein the base body (2) comprises a support surface (7) and a sliding surface (6), wherein cutting elements (3) are arranged on the support surface (7) and wherein soil can slide off across the sliding surface (6), wherein the sliding surface (6) connects to the support surface (7) tilted at an angle (α) in such a way that a distance (8) of the sliding surface (6) to a lower part of the soil that is cut through increases away from the support surface (7).

2. The soil tillage implement (1) according to claim 1, **characterized in that** the distance (8) increases at least in the area of a connection of the sliding surface (6) to the support surface (7).

3. The soil tillage implement (1) according to claim 1 or 2, **characterized in that** the distance (8) from a connection of the sliding surface (6) with the support surface (7) to an opposite end of the sliding surface (6) increases.

4. The soil tillage implement (1) according to claim 3, **characterized in that** the distance (8) increases continuously.

5. The soil tillage implement (1) according to any one of the claims 1 to 4, **characterized in that** the sliding surface (6) connects to the support surface (7) at least within individual areas at an angle (α) of at least 135°, preferably at least at least 140°, in particular, at least 142.5°.

6. The soil tillage implement (1) according to any one of the claims 1 to 5, **characterized in that** the support surface (7) is bent at least in sections.

7. The soil tillage implement (1) according to claim 6, **characterized in that** the support surface (7) is formed with a plurality of curved sections.

8. The soil tillage implement (1) according to any one of the claims 1 to 7, **characterized in that** one or a plurality of cutting elements (3) are arranged on the face side of the support surface (7).

9. The soil tillage implement (1) according to any one of the claims 1 to 8, **characterized in that** the base body (2) is made of a steel.

10. The soil tillage implement (1) according to any one of the claims 1 to 9, **characterized in that** the soil tillage implement (1) is a duck foot share.

## Revendications

1. Machine de travail de la terre (1), destinée à la préparation agricole de la terre, notamment à la coupe à surface de la terre, comprenant un corps de base (2), ainsi que des éléments de coupe (3) placés sur celui-ci, le corps de base (2) comportant une surface porteuse (7) et une surface de glissement (6), sur la surface porteuse (7) étant placés des éléments de coupe (3) et de la terre pouvant glisser par l'intermédiaire de la surface de glissement (6), la surface de glissement (6) se raccordant en position basculée sur la surface porteuse (7) avec un angle (α), de telle sorte qu'en s'éloignant de la surface porteuse (7), un écart (8) entre la surface de glissement (6) et une partie inférieure de la terre sectionnée augmente.

2. Machine de travail de la terre (1) selon la revendication 1, **caractérisée en ce que** l'écart (8) augmente au moins dans la zone d'un raccordement de la surface de glissement (6) sur la surface porteuse (7) .

3. Machine de travail de la terre (1) selon la revendication 1 ou 2, **caractérisée en ce que** l'écart (8) entre un raccordement de la surface de glissement (6) sur la surface porteuse (7) augmente vers une extrémité opposée de la surface de glissement (6).

4. Machine de travail de la terre (1) selon la revendication 3, **caractérisée en ce que** l'écart (8) augmente en continu.

5. Machine de travail de la terre (1) selon l'une quelconque des revendications 1 à 4, **caractérisée en ce que** la surface de glissement (6) se raccorde sur la surface porteuse (7), au moins dans des zones individuelles, avec un angle (α) d'au moins 135°, de préférence d'au moins 140°, notamment d'au moins 142,5°.

6. Machine de travail de la terre (1) selon l'une quelconque des revendications 1 à 5, **caractérisée en ce que** la surface porteuse (7) est conçue sous forme incurvée, au moins par segments.

7. Machine de travail de la terre (1) selon la revendication 6, **caractérisée en ce que** la surface porteuse (7) est conçue avec plusieurs segments incurvés.

8. Machine de travail de la terre (1) selon l'une quelconque des revendications 1 à 7, **caractérisée en ce que** sur la face frontale de la surface porteuse (7) sont placés un ou plusieurs éléments de coupe (3).

9. Machine de travail de la terre (1) selon l'une quelconque des revendications 1 à 8, **caractérisée en ce que** le corps de base (2) est constitué en un acier.

10. Machine de travail de la terre (1) selon l'une quelconque des revendications 1 à 9, **caractérisée en ce que** la machine de travail de la terre (1) est un soc à pattes d'oies.
